# EUROPEAN PATENT SPECIFICATION

(11) **EP 1 710 653 B1**
(45) Date of publication and mention of the grant of the patent: **25.12.2013**
(21) Application number: 06006659.4
(22) Date of filing: 30.03.2006
(51) Int. Cl.: G05D 11/03

(54) **Multiple delivering tap and process for manufacturing such tap**
Mehrwegehahn und Verfahren zur Herstellung eines solchen Hahns
Robinet de distribution multiple et procédé de fabrication d'un tel robinet

(30) Priority: 07.04.2005 IT TO20050229
(43) Date of publication of application: 11.10.2006
(73) Proprietor: Vitop Moulding S.R.L., 15100 Alessandria (IT)
(72) Inventor: Nini, Diego, 15100 Alessandria (IT)
(74) Representative: Garavelli, Paolo

(56) References cited:
- EP-A1- 1 498 359
- EP-A2- 0 134 142
- EP-B1- 0 889 846
- US-A1- 2003 168 472
- US-B1- 6 286 721

## Description

The present invention refers to a multiple delivering tap, particularly adapted to simultaneously deliver two or more liquid or fluid products from rigid, semi-rigid or soft vessels, for example, but not in a limited way, from vessels of the "bag-in-box" type. The present invention also refers to a process for manufacturing such delivering tap.

Taps of this type are known in the art, but essentially have two types of problems. The first problem, due to the presence of driving guides for each of the taps, which deliver each a liquid.from a vessel chamber contained therein, is related to the so-called "drawer effect" (effect which occurs if there are two guides with a single driving member), namely a condition for which, if such guides (usually two) are not perfectly pulled on their axis, can generate a sagging of the tap driving member.

The second problems is related to the fact that, in order to deliver the two liquids from well divided compartments of a vessel, known taps are realised, instead of having two separate chambers for liquids, by obtaining, on a single tap chamber, two concentric passages (one for each liquid), for which there is no absolute guarantee that liquids remain completely separate before their delivery: if liquids are mutually mixed, this is particularly severe in applications with detergents liquids and other "reactive" substances, in which enzyme and detergent products, if they mutually come in contact before their use, they perform a reaction and lose their efficacy.

In practice, taps are currently marketed with two separate delivering areas, which are however driven by a single driving member, which allows their simultaneous opening; and above all, there are no taps which, in their closing position, ensure the perfect separation of the two liquids. In fact, currently marketed taps are commonly equipped with a single delivering system divided into two parts, which, when it is in a "stop" status, does not guarantee that the two products do not come in contact.

Object of the present invention is solving the above prior art problems, by providing a delivering tap which allows the simultaneous delivery of two or more products from any type of vessel, both rigid and, semi-rigid, flexible, of the "bag-in-box" type and others.

A further object of the present invention is providing a tap as mentioned above, which allows delivering products mixed in different percentages due to the sizing of its delivering channels and the outlet holes with which it is equipped. With such arrangement, a delivery is allowed of two or more products from a single vessel divided into mutually separate compartments, or from two or more separate vessels, guaranteeing the quality of delivered initial and final products.

A further object of the present invention is providing a tap as mentioned above, which is equipped with a warranty seal directly on the dispenser, which does not allow using the application without removing it, thereby providing one more warranty to the user in terms of safety: the majority of marketed taps, not having warranty seals, only rely on the cup (which also operates as liquid batching device) which covers the dispenser, which is only constrained onto the dispenser itself and can be easily removed, and which therefore cannot be considered a safety system. The inventive tap further provides seal abutment means, which does not allow its opening when the seal itself is still assembled.

A further object of the present invention is providing a tap as mentioned above which is actuated by a single central push-button guide, which prevents the "drawer" effect and the sagging problems.

A further object of the present invention is providing a tap as mentioned above which is manufactured through a stamping process of its central body which uses "male crossing dies" and sliders which allow avoiding particular die movements, thereby saving on die cost, die cycle time and therefore, finally, on end product cost.

A further object of the present invention is realising an optimum distance of the two liquid outlet holes, which, when there are two straight channels, would be too far away and therefore would not allow the batching cap to collect all at one time the liquid delivered by the tap. The slanted channels have been therefore realised also because, above all for the "Bag-in-box" system, the position of the two mouths is compulsorily established by needs of the filling machine and the machine which produces the bags and welds the mouths onto the bag: realising slanted channels also optimises the total dispenser sizes.

The above and other objects and advantages of the invention, which will result from the following description, are obtained by a multiple delivering tap and a process for manufacturing it, as respectively claimed in claims 1 and 19. Preferred embodiments and non-trivial variations of the present invention are the subject matter of the dependent claims.

The present invention will be better described by some preferred embodiments thereof, provided as a non-limiting example, with reference to the enclosed drawings, in which:

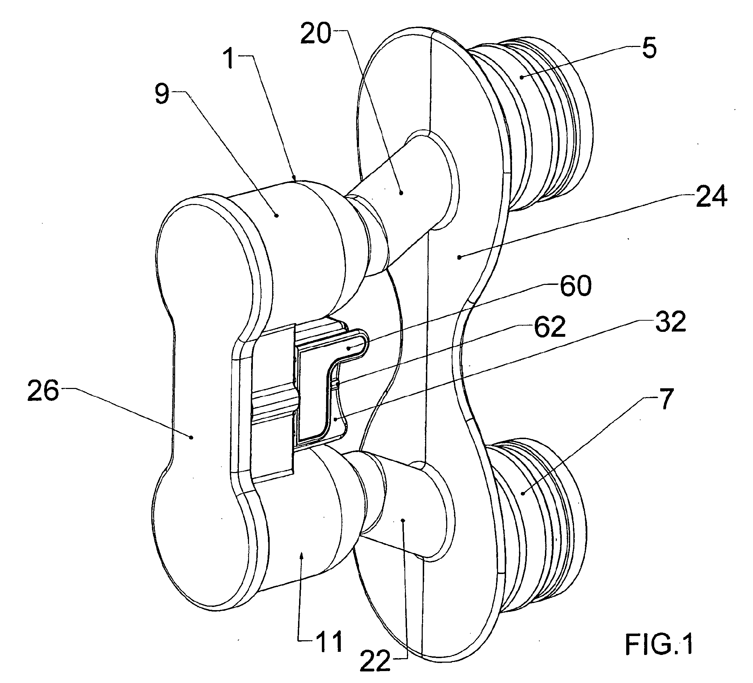

- Figure 1 is a perspective view of an embodiment of the delivering tap according to the present invention;

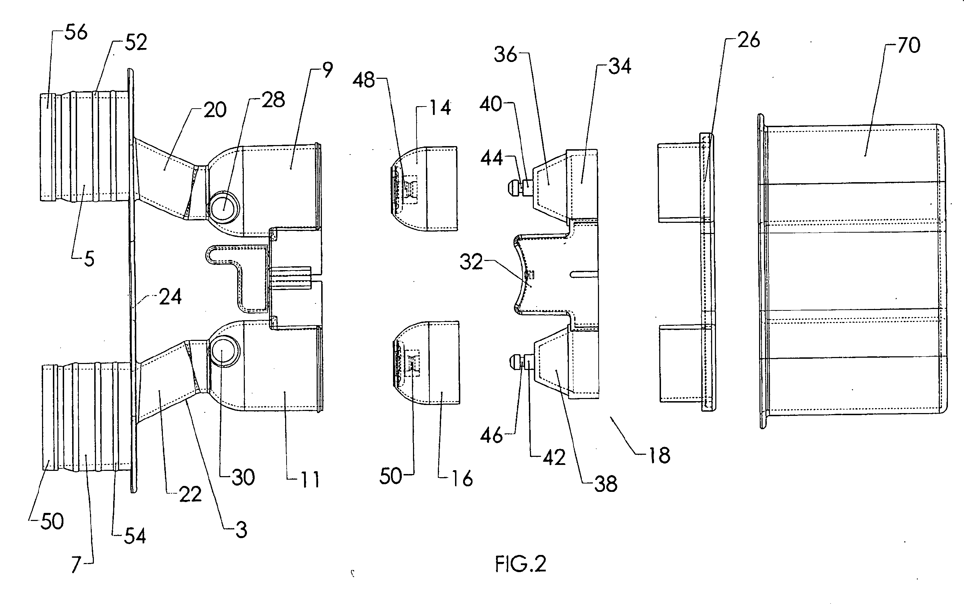

- Figure 2 is an exploded side view which shows the major components of the tap of Fig. 1;

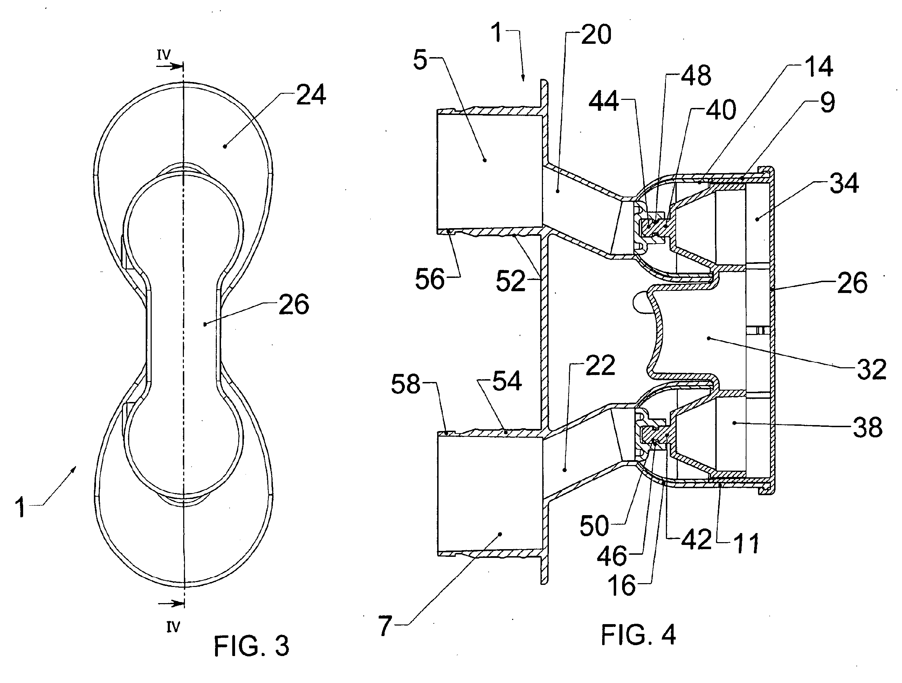

- Figure 3 is a top view of the tap of Fig. 1;
- Figure 4 is a side sectional view performed along line IV-IV of Fig. 3;
- Figure 5 is a schematic view which shows the position of two dies for manufacturing the tap of Fig. 1;
- Figure 6 is a side view of the tap in Fig. 1 equipped with a removable seal; and
- Figure 7 is a side view, which shows a variation of the tap of Fig. 1.

With reference to the Figures, a preferred embodiment of the tap of the present invention is shown and described. It will be immediately obvious that numerous variations and modifications (for example related to shape, sizes, arrangements and parts with equivalent functionality) can be made to the described tap without departing from the scope of the invention, as appears from the enclosed claims.

With reference to the Figures, the multiple delivering tap 1 of the present invention will be described for delivering two liquid products, but obviously it can be applied also to applications with different types of fluid and deliverable fluids. Moreover, the inventive tap 1 will be described herein below in its application for delivering two liquids, but obviously the structure of the tap 1 itself could be adapted to delivering a greater number of products.

The inventive tap 1, therefore, is useful for delivering at least two different liquids coming from different containing chambers of a same vessel (not shown) or of different vessels. It substantially comprises:
- a supporting body 3 equipped with at least two connecting mouths 5, 7 to the liquid containing chambers and at least two liquid delivering heads 9, 11;
- at least two elastic means 14, 16 for opening and closing the delivery of liquids: such elastic means 14, 16 are contained in and cooperate with the delivering heads 9, 11 assuming a liquid delivery enabling position and a liquid delivery preventing position;
- delivery driving means 18, which are contained in the supporting body 3 and are operatively connected to the elastic means 14, 16 for simultaneously driving and making the elastic means 14, 16 assume their liquid delivery opening and closing positions.

In particular, the elastic means 14, 16 are made of deformable plastic material and are substantially shaped as a dome: the thrusting action on the driving means 18 generates a pull deforming action on the elastic means 14, 16 which generates the squashing of the elastic means 14, 16 dome. Moreover, the elastic means 14, 16, when they return to their extended position after squashing, make a seal against residual drops of delivered liquids, as further characteristic of the inventive tap.

Still in particular, mouths 5, 7 and delivering heads 9, 11 are respectively mutually connected through a connection channel 20, 22, which is adapted to change the percentages of liquid to be distributed through its sizing.

Moreover, in the preferred embodiments shown, the connection channel 20, 22 axis is offset with respect to parallel axes of mouths 5, 7 and delivering heads 9, 11, so that the connection channel 20, 22 is slanted with respect to mouths 5, 7 and connection heads 9, 11.

The inventive tap 1 is further equipped with abutment means 24 against a vessel wall from which liquids have to be delivered, in order to guarantee a further seal of the assembly.

Moreover, the inventive tap 1 is equipped with closing means 26 adapted to close the body 3 structure. In particular, such closing means 26 are composed of an elongated cap, which is abuttingly engaged by the fingers of a hand when the opening pushing force is exerted, through other fingers of the same hand, on the driving means 32.

Still preferably, the closing means 26 are constrained onto the supporting body 3 upon completing the delivering tap 1.

Alternatively, the closing means 26 can be welded to the supporting body 3 upon completing the delivering tap 1 itself.

Each one of the delivering heads 9, 11 is equipped with at least one liquid delivering opening 28, 30: by suitably sizing such openings 28, 30, it is possible to batch the percentages of liquids to be delivered according to applications.

In the preferred embodiment shown, the driving means 18 are composed of a pushing key 32 operating on an elongated connecting member 34 from which engaging members 36, 38 with the elastic means 14, 16 are projecting.

Each one of such engaging members 36, 38 is preferably equipped with a cylindrical end 40, 42, in which a groove 44, 46 is obtained, adapted to contain a corresponding ring 48, 50 obtained inside each one of the elastic means 14, 16.

As further innovative characteristics, each one of the mouths 5, 7 is equipped with a plurality of sealing rings 52, 54, and also with extraction-preventing means 56, 58 from the vessel, thereby realising an efficient tap 1 under all points of view.

As further improvement, the tap 1 of this type can be equipped with warranty seal means 60, 62. Such warranty seal means 60, 62 are adapted to cooperate with the supporting body 3 and the driving means 18 to prevent the actuation of the driving means 18 in case the warranty seal means 60, 62 are present.

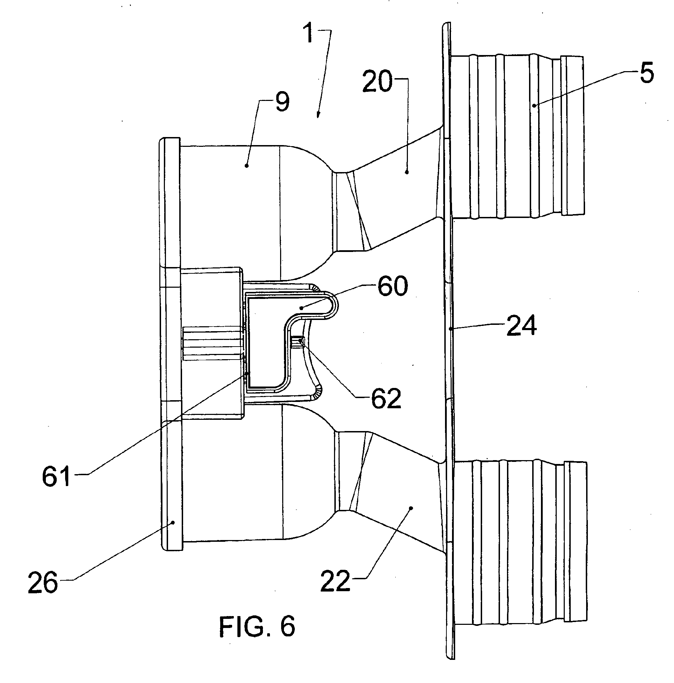

In particular, as shown in Fig. 6, the warranty seal means 60, 62 are composed of a counter-key 60 detachably connected to the body 3 through breakable connection points 61, in which the counter-key 60 is adapted to abut against stopper means 62 connected to the driving means 18; the stopper means 62 prevent the driving means 18 thrust towards the supporting body 3 when there is a counter-key 60.

The inventive tap 1 can further be equipped with a cup 70 for protecting the delivering heads 9, 11.

Alternatively, the cup 70 can also allow batching the liquids to be delivered.

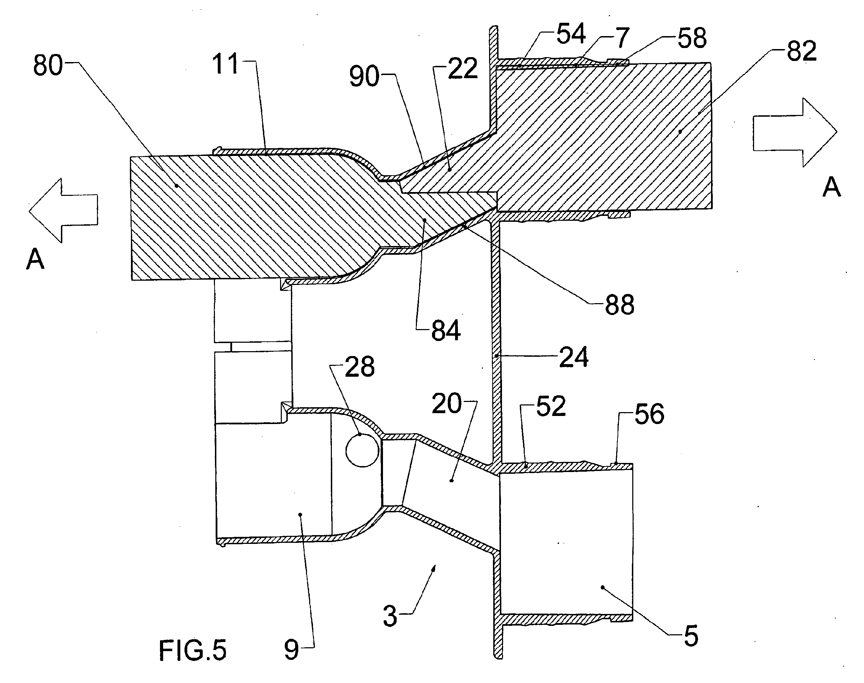

The above-described inventive tap 1 is made with an innovative process as regards manufacturing the supporting body 3. Such process, as shown in Fig. 5, provides, for every mouth 5, 7 and every delivering head 9, 11, a pair of male dies 80, 82 each equipped with a projection 84, 86 adapted to be operatively coupled with the respective projection 86, 84 of the other die 82, 80, each projection 84, 86 being equipped, on the side not in contact with the other die 80, 82, with a slanted profile 88, 90 adapted to realise the slanted connection channels 20, 22.

With this geometry with male dies 80, 82 which are crossing, one is thereby able to create a slanted channel 20,22 (through a simple opening movement of the die according to arrow A in Fig. 5) without being obliged to perform a translation movement towards the outside, as usually occurs when it is necessary to obtain slanted channels, and it is thereby avoided to realise a bigger and more complex, and therefore more costly, die.

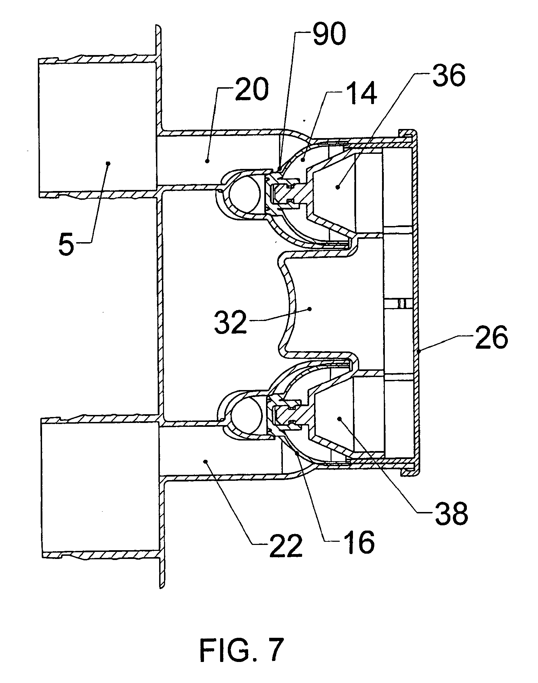

Fig. 7 instead shows a variation of the inventive tap 1, in which the connecting channels 20, 22 are made straight: in this case, as already seen, one is able to keep constant, with respect to the version shown above, the distance between the two liquid delivering chambers, by always using the manufacturing process with crossed male dies, but this time making the die cross on the lateral area of the main tap chamber, and namely next to point 90 in Fig. 7. In this case, the problem of possible drops at the end of the delivery is also solved, such problem occurring in the version with slanted channels 20, 22, since the membrane directly closes on the liquid outlet hole.

## Claims

1. Multiple delivering tap (1) for delivering at least two different liquids coming from different containing chambers or different vessels, **characterised in that** it comprises:
- a supporting body (3) equipped with at least two connecting mouths (5, 7) to the liquid containing chambers and with at least two delivering heads (9, 11) for liquids;
- at least two elastic means (14, 16) for opening and closing the liquid delivery, said elastic means (14, 16) being container in and cooperating with said delivering heads (9, 11) assuming an enabling position and a preventing position for delivering liquids;
- delivery driving means (18), said driving means (18) being contained in said supporting body (3) and being operatively connected to said elastic means (14, 16) in order to simultaneously drive and make said elastic means (14, 16) assume their opening and closing positions for delivering liquids.

2. Multiple delivering tap (1) according to claim 1, **characterised in that** said elastic means (14, 16) are made of flexible plastic material and are shaped substantially as a dome, a thrust action on said driving means (18) generating a deforming pulling action on said elastic means (14, 16) which squashes the dome of said elastic means (14, 16), said elastic means (14, 16), when returning into their extended position after their squashing, realising a seal which prevents remaining drops of delivered liquids from going out.

3. Multiple delivering tap (1) according to claim 1, **characterised in that** said mouths (5, 7) and said delivering heads (9, 11) are respectively mutually connected through a connection channel (20, 22), said connection channel (20, 22) being adapted to change the percentages of liquid to be delivered through its sizing.

4. Multiple delivering tap (1) according to claim 3, **characterised in that** the axis of said connection channel (20, 22) is offset with respect to the parallel axes of said mouths (5, 7) and said delivering heads (9, 11), said connection channel (20, 22) being slanted with respect to said mouths (5, 7) and said connection heads (9, 11).

5. Multiple delivering tap (1) according to claim 1, **characterised in that** it is further equipped with abutment means (24) against a wall of the vessel from which liquids are delivered.

6. Multiple delivering tap (1) according to claim 1, **characterised in that** it is further equipped with closing means (26) adapted to close the structure of said body (3).

7. Multiple delivering tap (1) according to claim 6, **characterised in that** said closing means (26) are composed of an elongated cap which is constrained in contrast by the fingers of a hand when an opening thrust force is exerted, through other fingers of the same hand, onto said driving means (32).

8. Multiple delivering tap (1) according to claim 6 or 7, **characterised in that** said closing means (26) are constrained onto said supporting body (3) upon completing said delivering tap (1).

9. Multiple delivering tap (1) according to claim 6 or 7, **characterised in that** said closing means (26) are welded onto said supporting body (3) upon completing said delivering tap (1).

10. Multiple delivering tap (1) according to claim 1, **characterised in that** each one of said delivering heads (9, 11) is equipped with at least one liquid delivering opening (28, 30).

11. Multiple delivering tap (1) according to claim 1, **characterised in that** said driving means (18) are composed of a pushing key (32) operating on an elongated connecting member (34) from which engaging members (36, 38) with said elastic means (14, 16) are projecting.

12. Multiple delivering tap (1) according to claim 11, **characterised in that** each one of said engaging members (36, 38) is equipped with a cylindrical end (40, 42) in which a groove is obtained (44, 46) which is adapted to contain a corresponding ring (48, 50) obtained inside each one of said elastic means (14, 16).

13. Multiple delivering tap (1) according to claim 1, **characterised in that** each one of said mouths (5, 7) is equipped with a plurality of sealing rings (52, 54).

14. Multiple delivering tap (1) according to claim 1, **characterised in that** each one of said mouths (5, 7) is equipped with extraction-preventing means (56, 58) from the vessel.

15. Multiple delivering tap (1) according to claim 1, **characterised in that** it is equipped with warranty seal means (60, 62).

16. Multiple delivering tap (1) according to claim 15, **characterised in that** said warranty seal means (60, 62) are adapted to cooperate with said supporting body (3) and said driving means (18) to prevent an actuation of said driving means (18) if said warranty seal means (60, 62) are present.

17. Multiple delivering tap (1) according to claim 15 or 16, **characterised in that** said warranty seal means (60, 62) are composed of a counter-key (60) which is detachably connected to said body (3) through breakable connecting points (61), said counter-key (60) being adapted to abut against stopper means (62) connected to said driving means (18), said stopper means (62) preventing a thrust of said driving means (18) onto the supporting body (3) when there is the counter-key (60).

18. Multiple delivering tap (1) according to claim 1, **characterised in that** it is further equipped with a protecting cup (70) of said delivering heads (9, 11).

19. Multiple delivering tap (1) according to claim 1, **characterised in that** it is further equipped with a cup (70) applied to said delivering heads (9, 11) for batching liquids to be delivered.

20. Process for manufacturing the supporting body (3) of the multiple delivering tap (1) according to claim 1, **characterised in that** it provides, for every mouth (5, 7) and every delivering head (9, 11), a pair of dies (80, 82) each one equipped with a projection (84, 86) adapted to be operatively coupled with the respective projection (86, 84) of the other die (82, 80), each projection (84, 86) being equipped, on the side not in contact with the other die (80, 82), with a slanted profile (88, 90) adapted to realise the slanted connecting channels (20, 22).

## Patentansprüche

1. Mehrfachhahn (1) für die Ausgabe von mindestens zwei unterschiedlichen Flüssigkeiten, die aus unterschiedlichen Behälterkammern oder unterschiedlichen Behältern kommen, der **dadurch gekennzeichnet ist, dass** er folgendes enthält:
- Einen tragenden Körper (3), der mit mindestens zwei Anschlussstutzen (5, 7) der Behälterkammern der Flüssigkeiten und mindestens zwei Ausgabeköpfen (9, 11) der Flüssigkeiten ausgestattet ist;
- Mindestens zwei elastische Vorrichtungen (14, 16) zur Öffnung und Schließung der Flüssigkeitsausgabe, die genannten elastischen Vorrichtungen (14, 16) sind in den genannten Ausgabeköpfen (9, 11) enthalten und arbeiten mit diesen zusammen, indem sie eine Aktivierungsposition und eine Sperrposition für die Flüssigkeitsausgabe einnehmen;
- Bedienelemente (18) der Ausgabe, die genannten Bedienelemente (18) sind im genannten tragenden Körper (3) enthalten und operativ mit den genannten elastischen Vorrichtungen (14, 16) verbunden, um die genannten elastischen Vorrichtungen (14, 16) gleichzeitig zu steuern und zu veranlassen, dass sie ihre Öffnungs- und Schließpositionen für die Flüssigkeitsausgabe einnehmen.

2. Mehrfachhahn (1) gemäß Patentanspruch 1, der **dadurch gekennzeichnet ist, dass** die genannten elastischen Vorrichtungen (14, 16) aus biegsamem Kunststoff hergestellt sind und grundlegend die Form einer Kuppel haben, die Schubwirkung an den genannten Bedienelementen (18) erzeugt eine Verzugswirkung an den genannten elastischen Vorrichtungen (14, 16), die die Quetschung der Kuppel der genannten elastischen Vorrichtungen (14, 16) auslöst, wenn sie nach der Quetschung in ihre erweiterte Position zurückkehren und eine Dichtheit gegen das Austreten der restlichen Tropfen der ausgegebenen Flüssigkeiten realisieren.

3. Mehrfachhahn (1) gemäß Patentanspruch 1, der **dadurch gekennzeichnet ist, dass** die genannten Anschlussstutzen (5, 7) und die genannten Ausgabeköpfe (9, 11) jeweils durch einen Verbindungskanal (20, 22) miteinander verbunden sind, der genannte Verbindungskanal (20, 22) dient dazu, die Prozentsätze der auszugebenden Flüssigkeit durch seine Dimensionierung zu ändern.

4. Mehrfachhahn (1) gemäß Patentanspruch 3, der **dadurch gekennzeichnet ist, dass** die Achse des genannten Verbindungskanals (20, 22) gegenüber den parallelen Achsen der genannten Anschlussstutzen (5, 7) und der genannten Ausgabeköpfe (9, 11) verfälscht ist, der genannte Verbindungskanal (20, 22) ist gegenüber den genannten Anschlussstutzen (5, 7) und den genannten Verbindungsköpfen (9, 11) geneigt.

5. Mehrfachhahn (1) gemäß Patentanspruch 1, der **dadurch gekennzeichnet ist, dass** er außerdem mit Auflagevorrichtungen (24) an einer Wand des Behälters, aus dem die Flüssigkeiten ausgegeben werden, ausgestattet ist.

6. Mehrfachhahn (1) gemäß Patentanspruch 1, der **dadurch gekennzeichnet ist, dass** er außerdem mit Schließvorrichtungen (26) ausgestattet ist, die dazu dienen, die Struktur des genannten Körpers (3) zu schließen.

7. Mehrfachhahn (1) gemäß Patentanspruch 6, der **dadurch gekennzeichnet ist, dass** die genannten Schließvorrichtungen (26) aus einer länglichen Kappe bestehen, die durch die Finger einer Hand in die Gegenrichtung geschoben wird, wenn die Schubkraft beim Öffnen ausgeübt wird, durch andere Finger derselben Hand, an den genannten Bedienelementen (32).

8. Mehrfachhahn (1) gemäß Patentanspruch 6 oder 7, der **dadurch gekennzeichnet ist, dass** die genannten Schließvorrichtungen (26) am genannten tragenden Körper (3) bei Fertigstellung des genannten Hahns (1) eingerastet werden.

9. Mehrfachhahn (1) gemäß Patentanspruch 6 oder 7, der **dadurch gekennzeichnet ist, dass** die genannten Schließvorrichtungen (26) am genannten tragenden Körper (3) bei Fertigstellung des genannten Hahns (1) angeschweißt werden.

10. Mehrfachhahn (1) gemäß Patentanspruch 1, der **dadurch gekennzeichnet ist, dass** jeder der Ausgabeköpfe (9, 11) mit mindestens einer Ausgabeöffnung (28, 30) für Flüssigkeiten ausgestattet ist.

11. Mehrfachhahn (1) gemäß Patentanspruch 1, der **dadurch gekennzeichnet ist, dass** die genannten Bedienelemente (18) aus einer Schubtaste (32) bestehen, die auf ein längliches Verbindungselement (34) einwirkt, aus dem Spannungselemente (36, 38) mit den genannten elastischen Vorrichtungen (14, 16) herausragen.

12. Mehrfachhahn (1) gemäß Patentanspruch 11, der **dadurch gekennzeichnet ist, dass** jedes der Spannungselemente (36, 38) mit einem Zylinderende (40, 42) ausgestattet ist, in dem ein Hohlraum (44, 46) angebracht ist, der dazu dient, einen entsprechenden Ring (48, 50) zu enthalten, der in jeder der elastischen Vorrichtungen (14, 16) angebracht ist.

13. Mehrfachhahn (1) gemäß Patentanspruch 1, der **dadurch gekennzeichnet ist, dass** jeder der Anschlussstutzen (5, 7) mit mehreren Dichtringen (52, 54) ausgestattet ist.

14. Mehrfachhahn (1) gemäß Patentanspruch 1, der **dadurch gekennzeichnet ist, dass** jeder der Anschlussstutzen (5, 7) mit Ausziehschutzvorrichtungen (56, 58) aus dem Behälter ausgestattet ist.

15. Mehrfachhahn (1) gemäß Patentanspruch 1, der **dadurch gekennzeichnet ist, dass** er mit Garantiesiegelvorrichtungen (60, 62) ausgestattet ist.

16. Mehrfachhahn (1) gemäß Patentanspruch 15, der **dadurch gekennzeichnet ist, dass** die genannten Garantiesiegelvorrichtungen (60, 62) dazu dienen, mit dem genannten tragenden Körper (3) und den genannten Bedienelementen (18) zusammenzuarbeiten, um die Aktivierung der genannten Bedienelemente (18) bei Anwesenheit der genannten Garantiesiegelvorrichtungen (60, 62) zu verhindern.

17. Mehrfachhahn (1) gemäß Patentanspruch 15 oder 16, der **dadurch gekennzeichnet ist, dass** die genannten Garantiesiegelvorrichtungen (60, 62) aus einer Gegentaste (60) bestehen, die mit dem genannten Körper (3) durch bruchempfindliche Verbindungspunkte (61) verbunden ist, aber abgenommen werden kann, die genannte Gegentaste (60) dient dazu, den Anschlag an den Befestigungsvorrichtungen (62) zu erreichen, die mit den genannten Bedienelementen (18) verbunden sind, die genannten Befestigungsvorrichtungen (62) verhindern den Schub der genannten Bedienelemente (18) in Richtung des genannten tragenden Körpers (3) bei Anwesenheit der genannten Gegentaste (60).

18. Mehrfachhahn (1) gemäß Patentanspruch 1, der **dadurch gekennzeichnet ist, dass** er außerdem mit einem Schutzbecher (70) der genannten Ausgabeköpfe (9, 11) ausgestattet ist.

19. Mehrfachhahn (1) gemäß Patentanspruch 1, der **dadurch gekennzeichnet ist, dass** er außerdem mit einem Schutzbecher (70) ausgestattet ist, der an den genannten Ausgabeköpfen (9, 11) für die Dosierung der auszugebenden Flüssigkeiten angebracht wird.

20. Herstellungsverfahren des tragenden Körpers (3) des Mehrfachhahns (1) gemäß Patentanspruch 1, das **dadurch gekennzeichnet ist, dass** es für jeden Anschlussstutzen (5, 7) und jeden Ausgabekopf (9, 11) ein Gesenkpaar (80, 82) vorsieht, die jeweils mit einem Vorsprung (84, 86) ausgestattet sind, der dazu dient, sich operativ mit dem entsprechenden Vorsprung (86, 84) des anderen Gesenks (82, 80) zu paaren, jeder Vorsprung (84, 86) ist an der Seite, die nicht mit dem anderen Gesenk (80, 82) in Kontakt steht, mit einem schrägen Profil (88, 90) ausgestattet, das dazu dient, die schrägen Verbindungskanäle (20, 22) zu realisieren.

## Revendications

1. Robinet distributeur multiple (1) pour la distribution d'au moins deux liquides différents provenant de chambres de réception différentes ou récipients différents, **caractérisé par** le fait de contenir :
- un corps de support (3) doté d'au moins deux goulots (5, 7) de raccordement aux chambres de réception des liquides et d'au moins deux têtes de distribution (9, 11) des liquides;
- au moins deux moyens élastiques (14, 16) d'ouverture et fermeture de la distribution des liquides, lesdits moyens élastiques (14, 16) étant contenus à l'intérieur et coopérant avec lesdites têtes de distribution (9, 11) en assumant une position d'habilitation et une position d'empêchement de la distribution des liquides;
- moyens de commande (18) de la distribution, lesdits moyens de commande (18) étant contenus dans ledit corps de support (3) et étant raccordés en mode opératif audits moyens élastiques (14, 16) pour commander simultanément et faire assumer auxdits moyens élastiques (14, 16) leurs positions d'ouverture et de fermeture de la distribution des liquides.

2. Robinet distributeur multiple (1) selon la revendication 1, **caractérisé par le fait que** lesdits moyens élastiques (14, 16) sont réalisés en matière plastique flexible et sont en forme substantiellement de coupole, l'action de poussée sur lesdits moyens de commande (18) en créant une action déformante de tir sur lesdits moyens élastiques (14, 16) qui provoque l'écrasement de la coupole desdits moyens élastiques (14, 16), lesdits moyens élastiques (14, 16), quand ils retournent dans leur position déployée après l'écrasement en réalisant une tenue contre la sortie de gouttes résiduelles des liquides distribués.

3. Robinet distributeur multiple (1) selon la revendication 1, **caractérisé par le fait que** lesdits goulots (5, 7) et lesdites têtes de distribution (9, 11) sont raccordés respectivement entre elles au moyen d'un canal de raccordement (20, 22), ledit canal de raccordement (20, 22) étant apte à changer les pourcentages de liquide à distribuer au moyen de son dimensionnement.

4. Robinet distributeur multiple (1) selon la revendication 3, **caractérisé par le fait que** l'axe dudit canal de raccordement (20, 22) est contrebalancé par rapport aux axes parallèles desdits goulots (5, 7) et lesdites têtes de distribution (9, 11), ledit canal de raccordement (20, 22) étant incliné par rapport auxdits goulots (5, 7) et lesdites têtes de raccordement (9, 11).

5. Robinet distributeur multiple (1) selon la revendication 1, **caractérisé par** le fait d'être doté en outre de moyens d'appui (24) contre une paroi du récipient duquel sont distribués les liquides.

6. Robinet distributeur multiple (1) selon la revendication 1, **caractérisé par** le fait d'être doté en outre de moyens de fermeture (26) aptes à fermer la structure dudit corps (3).

7. Robinet distributeur multiple (1) selon la revendication 6, **caractérisé par le fait que** lesdits moyens de fermeture (26) sont constitués d'un capuchon allongé qui est utilisé pour s'opposer au doigt d'une main quand on exerce la force de poussée en ouverture, au moyen des autres doigts de la même main, sur lesdits moyens de commande (32).

8. Robinet distributeur multiple (1) selon la revendication 6 ou 7, **caractérisé par le fait que** lesdits moyens de fermeture (26) sont encastrés sur le dit corps de support (3) à l'acte de l'achèvement dudit robinet distributeur (1).

9. Robinet distributeur multiple (1) selon les revendications 6 ou 7, **caractérisé par le fait que** lesdits moyens de fermeture (26) sont soudés sur ledit corps de support (3) pour compléter ledit robinet distributeur (1).

10. Robinet distributeur multiple (1) selon la revendication 1, **caractérisé par le fait que** chaque tête de distribution (9, 11) est dotée d'au moins une ouverture de distribution (28, 30) pour les liquides.

11. Robinet distributeur multiple (1) selon la revendication 1, **caractérisé par le fait que** lesdits moyens de commande (18) sont constitués d'une touche de poussée (32) opérant sur un élément de raccordement allongé (34) d'où sortent des éléments d'engagement (36, 38) avec lesdits moyens élastiques (14, 16).

12. Robinet distributeur multiple (1) selon la revendication 11, **caractérisé par le fait que** chaque élément d'engagement (36, 38) est doté d'une extrémité cylindrique (40, 42) dans laquelle est obtenue une gorge (44, 46) apte à contenir une bague correspondante (48, 50) obtenue à l'intérieur de chacun desdits moyens élastiques (14, 16).

13. Robinet distributeur multiple (1) selon la revendication 1, **caractérisé par le fait que** chacun desdits goulots (5, 7) est doté d'une pluralité de bagues d'étanchéité (52, 54).

14. Robinet distributeur multiple (1) selon la revendication 1, **caractérisé par le fait que** chacun desdits goulots (5, 7) est doté de moyens anti-extraction (56, 58) du récipient.

15. Robinet distributeur multiple (1) selon la revendication 1, **caractérisé par** le fait d'être doté de moyens de scellement de garantie (60, 62).

16. Robinet distributeur multiple (1) selon la revendication 15, **caractérisé par le fait que** lesdits moyens de scellement de garantie (60, 62) sont aptes à coopérer avec ledit corps de support (3) et lesdits moyens de commande (18) pour empêcher l'actionnement desdits moyens de commande (18) en cas de présence desdits moyens de scellement de garantie (60, 62).

17. Robinet distributeur multiple (1) selon la revendication 15 ou 16, **caractérisé par le fait que** lesdits moyens de scellement de garantie (60, 62) sont constitués par une contre-touche (60) raccordée en mode amovible audit corps (3) au moyen de points de raccordement cassables (61), ladite contre touche (60) étant apte à servir de butée contre des moyens d'arrêt (62) raccordés audits moyens de commande (18), lesdits moyens d'arrêt (62) en empêchant la poussée desdits moyens de commande (18) vers ledit corps de support (3) en présence de ladite contre-touche(60).

18. Robinet distributeur multiple (1) selon la revendication 1, **caractérisé par** le fait d'être doté en outre d'un verre (70) de protection des dites têtes de distribution (9, 11).

19. Robinet distributeur multiple (1) selon la revendication 1, **caractérisé par** le fait d'être doté en outre d'un verre (70) appliqué aux dites têtes de distribution (9, 11) pour le dosage des liquides à distribuer.

20. Procédure pour la fabrication du corps de support (3) du robinet distributeur multiple (1) selon la revendication 1, **caractérisé par** le fait de prévoir, pour chaque goulot (5, 7) et chaque tête de distribution (9, 11) un couple de moules (80, 82) dotés chacun d'une saillie (84, 86) apte à s'accoupler en mode opératif avec la saillie respective (86, 84) de l'autre moule (82, 80), chaque saillie (84, 86) étant dotée, sur le côté non en contact avec l'autre moule (80, 82), d'un profil incliné (88, 90) apte à réaliser les canaux de raccordement (20, 22) inclinés.
